(19) Europäisches Patentamt
European Patent Office
Office européen des brevets

(11) Publication number: 0 162 114
B1

(12) **EUROPEAN PATENT SPECIFICATION**

(45) Date of publication of patent specification: **27.12.89**

(51) Int. Cl.$^4$: **C 04 B 24/26**, C 04 B 24/12, C 04 B 24/16

(21) Application number: **84902948.3**

(22) Date of filing: **31.07.84**

(86) International application number: **PCT/JP84/00390**

(87) International publication number: **WO 85/00802 28.02.85 Gazette 85/05**

# (54) CONCRETE COMPOSITION FOR UNDERWATER APPLICATION.

(30) Priority: **18.08.83 JP 149685/83**
**11.07.84 JP 142406/84**
**11.07.84 JP 142407/84**

(43) Date of publication of application:
**27.11.85 Bulletin 85/48**

(45) Publication of the grant of the patent:
**27.12.89 Bulletin 89/52**

(84) Designated Contracting States:
**DE FR GB NL SE**

(56) References cited:
**JP-A-58 190 851**
**JP-A-59 020 956**
**JP-A-59 054 656**
**US-A-3 086 588**

(73) Proprietor: **TAKENAKA KOMUTEN CO. LTD.**
**27, 4-chome, Honmachi Higashi-ku**
**Osaka-shi Osaka 541 (JP)**

(73) Proprietor: **TAKENAKA DOBOKU CO. LTD.**
**21-1, 8-chome, Ginza Chuo-ku**
**Tokyo 104 (JP)**

(73) Proprietor: **SANKYO CHEMICAL INDUSTRIES LTD.**
**9-19, 3-chome, Ginza Chuo-ku**
**Tokyo (JP)**

(72) Inventor: **ITO, Koichi Takenaka Komuten Co. Ltd.**
**Technical Laboratory 5-14, Minamisuna 2-chome**
**Koto-ku Tokyo 136 (JP)**
Inventor: **SAKUTA, Masaharu Takenaka Komuten Co., Ltd.**
**Technical Laboratory 5-14, Minamisuna 2-chome**
**Koto-ku Tokyo 136 (JP)**
Inventor: **YOSHIOKA, Yasuhiko Takenaka Komuten Co. Ltd.**
**Technical Laboratory 5-14, Minamisuna 2-chome**
**Koto-ku Tokyo 136 (JP)**
Inventor: **KAYA, Tadahiro 20-24, Fujimigaoka 1-chome**
**Ninomiya-cho, Naka-gun**
**Kanagawa 259-01 (JP)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).



Courier Press, Leamington Spa, England.

(72) Inventor: SHIOYA, Tsunetoshi
11-33, Honkugenuma 1-chome
Fujisawa-shi Kanagawa 251 (JP)
Inventor: YAMAKAWA, Hiroyuki
98-4, Shimotsuruma, Yamato-shi
Kanagawa 242 (JP)
Inventor: SHIMOYAMA, Yoshifumi
313-7, Shimotsuchidana, Fujisawa-shi
Kanagawa 252 (JP)

(74) Representative: Deans, Michael John Percy et al
Lloyd Wise, Tregear & CO. Norman House
105-109 Strand
London WC2R OAE (GB)

**Description**

The present invention relates to concrete and mortar compositions for underwater use.

The compositions of the present invention include mortar compositions comprising cement and fine aggregate (sand), and concrete compositions comprising cement, and coarse aggregate, optionally with fine aggregate (sand).

As concrete is being laid under water, the cement paste portion tends to be washed away from the part of the concrete mix exposed to water and the resultant concrete has a nonuniform composition. This may occur either as the concrete mix is falling through the water or as the concrete mix is spreading in a lateral direction. As a result, the strength of the concrete mix is reduced, and the separated cement paste diffuses into the surrounding water rendering it turbid. In order to resolve these problems, in a structural material mixture for underwater structures, the technique of adding to concrete a cellulose derivative or polyacrylamide (i.e. an acrylamide homopolymer) as an admixture has been suggested in DE—A—2541747. However, when such an admixture is used, the concrete mix obtained has a delayed setting time and a lower strength, particularly initially, than a concrete mix containing no such agent.

A concrete composition containing a polyacrylamide partial hydrolysate compound as disclosed in Japanese Patent Disclosure No. 59-54656 has excellent characteristics as an underwater concrete in that it does not have a delayed setting time or a low initial strength. However, this polymer compound has a strong cohesive force with respect to cement as in the case of an acrylamide homopolymer. Therefore, the concrete mix tends to harden and may be difficult to mix. When mixing of the concrete mix is difficult, mixing to obtain a uniform composition is time-consuming. In addition, the load on a mixer is increased, resulting in an impractical concrete composition.

Our European Patent Specification EP—A—0100671 discloses the use on the one hand of polyacrylamide partial hydrolysate as sole additive to concrete or mortar for underwater use and on the other hand the use of two additives together, namely a polyacrylamide compound and an aldehyde. Among the many examples given for the polyacrylamide compound necessarily to be used together with aldehyde are polyacrylamide partial hydrolysate and a copolymer of acrylamide or methacrylamide with 2 - acrylamide - 2 - methyl - propane sulphonic acid.

US—A—4015991 discloses an additive comprising a hydrolysate of a copolymer containing 2 - acrylamide - 2 - methylpropane - sulphonic acid units and US—A—4340525 discloses an additive comprising a copolymer containing vinyl sulphonic acid units; but in each case such additives are added to deep-well hydraulic cement slurries and are said to prevent water in the hydraulic cement slurry from being absorbed in a porous stratum as the slurry is forced under pressure down a deep-well, the aim being to prevent the slurry from setting. A delayed setting time would be unacceptable for concrete or mortar laid under water, as cement would tend to wash out of the composition, and it is noteworthy that neither of these U.S. Patents makes any suggestion of adding such additives to concrete or mortar compositions for laying under water.

The present applicants have made extensive studies to resolve the problems of finding concrete and mortar compositions which can satisfactorily be laid under water. As a result of these studies, we have found that a concrete or mortar composition containing 0.1 to 4% by weight of an additive effective in said composition substantially to prevent separation or washing out of cement from the composition and consisting solely of a water soluble vinyl polymer based on the weight cement and containing units represented by a general formula (I):

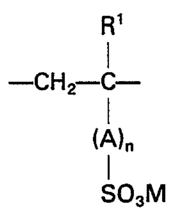

(I)

wherein $R^1$ is a hydrogen atom or a lower alkyk group, A is $—CH_2—$, $—CONHCH_2—$, or

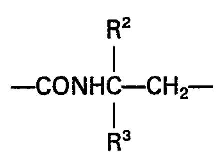

wherein $R^2$ and $R^3$ are a hydrogen atom or a lower alkyl group and can be the same or different, n is 0 or 1, and M is a hydrogen atom, alkali metal or ammonium; or 0.1 to 4% by weight of a water soluble polymer based on the weight of cement and containing both units represented by the formula (I), and units represented by general formula (II):

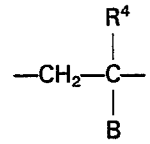 (II)

wherein $R^4$ is a hydrogen atom or a lower alkyl group, B is $—CONH_2$ or $—COOR^5$ wherein $R^5$ is a lower alkyl group or a lower hydroxyalkyl group or

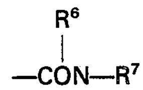

wherein $R^6$ and $R^7$ are the same or different lower alkyl group or such that when one is a hydrogen atom the other is a lower alkyl group, $R^6$ and $R^7$ being able to form 5- or 6-member rings together with nitrogen atoms bonded thereto with or without oxygen atoms, is free from the problems associated with conventional concrete and mortar compositions and has desirable characteristics.

Examples of vinyl monomers containing sulphonic groups and corresponding to units having the general formula (I) include 2 - acrylamidoethane - sulphonic acid, 2 - acrylamido - propanesulphonic acid, 2 - acrylamido - 2 - methylpropane - sulphonic acid, 2 - methacrylamidoethenesulphonic acid, 2 - methacrylamidopropanesulphonic acid, 2 - methacrylamido - 2 - methylpropanesulphonic acid, acrylamidomethanesulphonic acid, methacrylamidomethanesulphonic acid, vinylsulphonic acid, and alkali metal salts or ammonium salts thereof.

Examples of vinyl monomers corresponding to units having the general formula (II) include acrylamide, methacrylamide, N,N - dimethylacrylamide, N,N - diethylacrylamide, N - acryloylpiperidine, N - acryloylmorpholine, N,N - dimethylmethacrylamide, N,N - diethylmethacrylamide, N - methacryloylpiperidine, N - methacryloylmorpholine, N - methylacrylamide, N - ethylacrylamide, N - propylacrylamide, N - methylmethacrylamide, N - ethylmethacrylamide, N - propylmethacrylamide, methyl acrylate, ethyl acrylate, hydroxyethyl acrylate, methyl methacrylate, ethyl methacrylate, and hydroxyethyl methacrylate.

A water soluble vinyl polymer to be used in the present invention may be prepared by polymerizing a vinyl monomer corresponding to the general formula (I) by a known method or by co-polymerizing a vinyl monomer corresponding to the general formula (I) and a vinyl monomer corresponding to the general formula (II) by a known method. Polymerization is preferably performed in an aqueous medium using a radical polymerization initiator such as a peroxide or an organic azo compound. The polymer can have a molecular weight of 1,000,000 to about 20,000,000 although it varies depending upon the type and amount of the polymerization initiator used. When the polymerization reaction is performed in an aqueous medium, the water soluble vinyl polymer compound obtained may contain carboxyl groups. Therefore, the polymerization reaction is preferably performed in a neutral liquid or at a low temperature.

When the polymer is produced by co-polymerization as aforesaid, we find that when the ratio of the vinyl monomer corresponding to units of general formula (I) is increased, mixing of the concrete or mortar composition is rendered easier. However, the higher the ratio, the less effective is the additive in preventing cement separation and decrease in compressive strength in the concrete or mortar composition. Therefore, the preferred molar ratio of the monomer corresponding to units of general formula (I) is 3% or more and most preferably 3 to 95%.

The water soluble vinyl polymer should have a high molecular weight to impart the property of preventing separation of cement from the concrete composition in water. Thus, the molecular weight of the water soluble vinyl polymer is preferably 1,000,000 or more. The water soluble vinyl polymer must be added at least in an amount of 0.1% by weight based on the cement content of the concrete composition. When the amount of the water soluble vinyl polymer exceeds about 4% by weight, it is uneconomical and also results in a viscous material which is hard to handle and has a low compressive strength.

The water soluble vinyl polymer can be added to the cement in advance of concrete formation; it can be added to the ready mixed concrete; or it can be dissolved and then added to the ready mixed concrete. At this time, a suitable amount of a concrete dispersant such as a sulphonic acid derivative, e.g. melamine sulphonic acid-formaldehyde condensate, naphthalinesulphonic acid-formaldehyde condensate or lignin sulphonate can be added to further improve concrete flow characteristics.

The invention is further described by way of a number of non-limiting examples.

Example 1

A number of water soluble vinyl polymers identified in Table 2 were produced by the following method: The particular vinyl monomer corresponding to a particular unit of formula (I) and the particular vinyl monomer corresponding to a particular unit of formula (II) were polymerized to prepare the selected water soluble vinyl polymer with a molecular weight of about 7,000,000.

One % by weight of each polymer was added to a concrete mix of the constituent proportions as illustrated in Table 1 below based on the cement content thereof.

TABLE 1

| Unit amounts (kg/$m^3$) | | | | Water-cement ratio (%) | Sand-aggregate ratio (%) | Air content (%) |
|---|---|---|---|---|---|---|
| Water | Cement | Fine aggregate | Coarse aggregate | | | |
| 235 | 440 | 643 | 979 | 53 | 40 | 1 |

The resultant mixture was mixed with a uniaxial forced mixer having a volume of 50 l. The mixed state was observed, and the mixture was subjected to a falling through water test and a compressive strength test.

The falling through water test was performed by pouring the specimen concrete mix into a truncated container having a lower diameter of 5 cm, an upper diameter of 7 cm and a depth of 8 cm. The test was conducted by placing the test container with the specimen concrete mix at a height of 10 cm above the water surface in a cylindrical container having a diameter of 20 cm and a height of 26 cm and containing water therein to a depth of 16 cm, and then pouring the specimen concrete mix so as to let it fall by gravity into the water. The test results were obtained by measuring the turbidity of the water by transmittance at a wavelength of 660 µm with a photoelectric photometer. A higher transmittance means that a smaller amount of cement component has been separated from the concrete and diffused into the water, and hence, that a smaller deterioration of the concrete quality has occurred. Results are given in Table 2.

Specimens for the compressive strength test were prepared by forming the concrete mix into the form of a cylinder having a diameter of 15 cm and a height of 30 cm and then curing it in water at 20°C. The tests were carried out on the 7th and 28th day. Results are again given in Table 2.

The letters A, B and C are used to indicate the mixing state of the concrete mix according to the following key:

A: Within 2 minutes after starting mixing of the concrete mix, a uniform mix with flowability is obtained. The mix has a desired slump value and is well mixed.

B: After mixing is started, the mix becomes temporarily hard. Within 7 minutes, the mix achieves a uniform state having flowability and a desired slump value.

C: After mixing is started, the concrete mix coheres firmly and mixing is rendered difficult to perform. In order to obtain a uniform state with flowability, a mixing time of longer than 7 minutes is required.

For the purpose of comparison, similar tests were performed for a plain concrete mix which did not contain a water soluble vinyl polymer and for concrete mixes which respectively contained 1% by weight of polyacrylamide (molecular weight: 7,000,000), and of a polyacrylamide partial hydrolysate compound (molecular weight: 7,000,000), based on the weight of the cement content, in place of the water soluble vinyl polymer.

TABLE 2

| | Water soluble vinyl polymer | Mixing state | Transmittance (%) | Slump (cm) | Compressive strength (MPa) 7th day | Compressive strength (MPa) 28th day |
|---|---|---|---|---|---|---|
| Example | Sodium 2-acrylamido-2-methylpropanesulphonate-acrylamide copolymer (10:90% mole) | A | 99 | 21 | 25.2 | 36.3 |
| | Sodium 2-acrylamido-ethanesulphonateacrylamide copolymer (10:90% mole) | A | 98 | 21.5 | 24.8 | 35.4 |
| | Sodium 2-acrylamido-2-methyl-propanesulphonate-methacrylamide copolymer (10:90% mole) | A | 98 | 21 | 25.0 | 39.7 |
| | Sodium 2-acrylamido-2-methyl-propanesulphonate-N,N-dimethyl-acrylamide copolymer (10:90% mole) | A | 100 | 21.5 | 25.6 | 37.1 |
| Comparative Example | Polyacrylamide | C | 89 | 19—20 | 13.7 | 27.5 |
| | Polyacrylamide partial hydrolysate compound (6% mole hydrolysis degree) | B | 89 | 21.5 | 25.2 | 35.8 |
| | No admixture | A | 3 | 22 | 25.2 | 35.1 |

Example 2

A similar test to that in Example 1 was performed for concrete mixes containing 1% by weight, based on the cement content, of water soluble vinyl copolymers of sodium 2 - acrylamido - 2 - methylpropane sulphonate and acrylamide having different polymerization molar ratios and different molecular weights.

The results obtained are shown in Table 3 below.

TABLE 3

| | Sodium 2-acrylamido-2-methylpropanesulphonate/-acrylamide (molar ratio) | Molecular weight (×10,000) | Mixing state | Transmittance (%) | Slump (cm) | Compressive strength (MPa) 7th day | 28th day |
|---|---|---|---|---|---|---|---|
| Example | 3/97 | 100<br>300<br>700 | A<br>A<br>A | 75<br>90<br>100 | 21.5<br>21<br>21 | 25.1<br>25.9<br>25.3 | 36.8<br>36.3<br>36.8 |
| | 10/90 | 100<br>300<br>700 | A<br>A<br>A | 77<br>89<br>99 | 21<br>21<br>21 | 25.2<br>25.6<br>25.2 | 35.9<br>36.4<br>36.3 |
| | 20/80 | 100<br>300<br>700 | A<br>A<br>A | 75<br>88<br>99 | 24<br>23.5<br>23.5 | 25.1<br>25.6<br>25.5 | 36.7<br>37.0<br>37.5 |
| | 50/50 | 100<br>300<br>700 | A<br>A<br>A | 74<br>88<br>98 | 24<br>24<br>23.5 | 25.5<br>25.8<br>25.7 | 37.1<br>36.3<br>37.5 |
| | 85/15 | 100<br>300<br>700 | A<br>A<br>A | 70<br>87<br>98 | 24<br>24<br>24 | 25.0<br>25.4<br>25.3 | 36.1<br>36.7<br>37.2 |
| Comparative Example | 1/99 | 100<br>300<br>700 | B<br>B<br>B | 76<br>90<br>100 | 21<br>20<br>20 | 25.4<br>25.5<br>25.7 | 35.3<br>36.3<br>37.1 |

Example 3

A similar test to that in Example 1 was performed for concrete mixes which were obtained by adding a water soluble vinyl polymer compound of sodium 2 - acrylamido - 2 - methylpropanesulphonate and acrylamide having a polymerization molar ratio of 10:90 and having a molecular weight of 7,000,000 to the concrete mix shown in Table 1. Table 4 below shows the results obtained in relation to the amount of the compound added.

TABLE 4

| | Addition amount (% by weight based on cement content) | Mixing state | Transmittance (%) | Slump (cm) | Compressive strength (MPa) 7th day | 28th day |
|---|---|---|---|---|---|---|
| Example | 0.1<br>0.5<br>1.0<br>2.0<br>4.0 | A<br>A<br>A<br>A<br>A | 89<br>93<br>99<br>100<br>100 | 19<br>22<br>21<br>21<br>21 | 25.0<br>24.9<br>25.2<br>24.7<br>22.8 | 36.1<br>36.3<br>36.3<br>36.0<br>34.8 |
| Comparative Example | 0.05 | B | 60 | 12 | 23.7 | 34.3 |

Example 4

The water soluble vinyl polymer used in Example 3 was added to the mortar in Table 5 in an amount of 1% by weight based on the cement content. The resulting mixture was mixed with a mortar mixer having a volume of 3 l. The mixed mortar was subjected to a flow test, a falling through water test and a compressive strength test.

TABLE 5

| Unit amounts ($kg/m^3$) | | | Water-cement ratio (%) | Sand-cement ratio (%) |
|---|---|---|---|---|
| Water | Cement | Sand | | |
| 338 | 520 | 1040 | 65 | 200 |

The flow test was performed in accordance with JIS (Japanese Industrial Standards) R5201.

The falling through water test was performed by pouring the specimen mortar into a cylindrical container having a diameter of 5 cm and a depth of 5 cm. The test was conducted by placing the test container with the specimen mortar at a height of 10 cm above the water surface in a graduated measuring cylinder containing 1 l of water. The test results were obtained by measuring the turbidity of the water by transmittance at a wavelength of 660 μm with a photoelectric photometer. A higher transmittance means that a smaller amount of cement component has been separated from the mortar and diffused into the water, and hence, that a smaller deterioration of the mortar quality has occurred.

Specimens for the compressive strength test were prepared by forming the mortar into the form of a square rod having a section of 4×4 cm and a length of 16 cm and then curing it in water at 20°C. The test was carried out on the 7th and 28th day.

The mixing state of the mortar was indicated in the same manner as in Example 1.

For the purpose of comparison, similar tests were performed for mortar which contained 1% by weight of polyacrylamide (molecular weight: 7,000,000) based on the cement content in place of the water soluble vinyl polymer.

The results obtained are shown in Table 6.

TABLE 6

| | Water soluble vinyl polymer compound | Mixing state | Trans-mittance (%) | Flow (cm) | Compressive strength | |
|---|---|---|---|---|---|---|
| | | | | | 7th day | 28th day |
| Example | Sodium 2-acrylamido-2-methylpropanesulphonate-acrylamide copolymer (10:90% mole) | A | 98 | 18 | 25.5 | 30.4 |
| Comparative Example | Polyacrylamide | C | 92 | 15 | 18.6 | 24.5 |

**Claims**

1. A concrete or mortar composition comprising cement, and coarse and/or fine aggregate; characterised in that said composition is capable of being laid underwater without substantial separation or washing out of cement, said composition containing 0.1 to 4% by weight, based on the weight of cement, of an additive effective in said composition substantially to prevent such separation of cement and consisting solely of a water soluble vinyl polymer containing units represented by general formula (I):

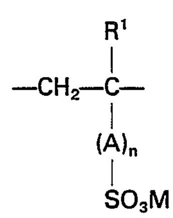

(I)

wherein $R^1$ is a hydrogen atom or a lower alkyl group, A is $—CH_2—$, $—CONHCH_2—$, or

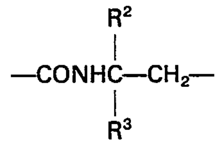

wherein $R^2$ and $R^3$ are a hydrogen atom or a lower alkyl group and can be the same or different, n is 0 or 1, and M is a hydrogen atom, alkali metal or ammonium.

2. A composition according to Claim 1, further characterised in that the water soluble vinyl polymer contains, in addition to units represented by formula (I), units represented by general formula (II):

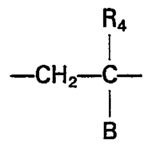

(II)

wherein $R_4$ is a hydrogen atom or a lower alkyl group, B is $-CONH_2$ or $-COOR_5$, $R_5$ being a lower alkyl group or a lower hydroxylalkyl group.

3. A composition according to Claim 2, further characterised in that the water soluble vinyl polymer is obtained by polymerizing vinyl sulphonic monomer represented by general formula (III):

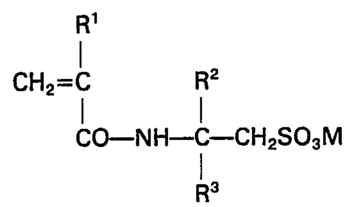

(III)

wherein $R^1$, $R^2$ and $R^3$ are a hydrogen atom or a lower alkyl group and can be the same or different, and M is a hydrogen atom, an alkali metal or ammonium, with a vinyl monomer represented by general formula (IV):

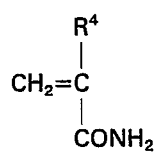

(IV)

wherein $R^4$ is a hydrogen atom or a lower alkyl group.

4. A composition according to Claim 1, further characterised in that the water soluble vinyl polymer is obtained by polymerizing vinyl sulphonic monomer represented by general formula (III):

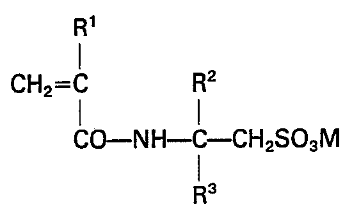

(III)

wherein $R^1$, $R^2$ and $R^3$ are a hydrogen atom or a lower alkyl group and can be the same or different, and M is a hydrogen atom, an alkali metal or ammonium, with a vinyl monomer represented by general formula (V):

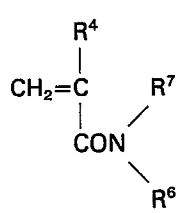

(V)

wherein $R^4$ is a hydrogen atom or a lower alkyl group, and $R^6$ and $R^7$ are the same or different lower alkyl group or such that when one is a hydrogen atom the other is a lower alkyl group, $R^6$ and $R^7$ being able to

bond to each other with or without oxygen atoms together with nitrogen atoms bonded thereto so as to form a 5- or 6-member ring.

5. A composition according to Claim 1, further characterised in that the water soluble vinyl polymer is obtained by copolymerization of a vinyl sulphonic monomer selected from 2 - acrylamido - ethanesulphonic acid, 2 - acrylamido - propanesulphonicacid, 2 - acrylamido - 2 - methylpropanesulphonic acid, 2 - methacrylamido - ethanesulphonic acid, 2 - methacrylamido - propanesulphonic acid, 2 - methacrylamido - 2 - methyl - propanesulphonic acid, acrylamido - methanesulphonic acid, methacrylamidomethanesulphonic acid, vinyl - sulphonic acid, and alkali metal or ammonium salts thereof with a vinyl monomer selected from acrylamide, methacrylamide, N,N - dimethylacrylamide, N,N - diethylacrylamide, N - acryloylpiperidine, N - acryloylmorpholine, N,N - dimethylmethacrylamide, N,N - diethylmethacrylamide, N - methacryloylpiperidine, N - methacryloylmorpholine, N - methacrylamide, N - ethylacrylamide, N - propylacrylamide, N - methylmethacrylamide, N - ethylmethacrylamide, N - propylmethacrylamide, methyl acrylate, ethyl acrylate, hydroxyethyl acrylate, methyl methacrylate, ethyl methacrylate, and hydroxyethyl methacrylate.

6. A composition according to Claim 4, further characterised in that the water soluble polymer comprises a copolymer of acrylamide, methacrylamide or N,N - dimethylacrylamide and 2 - acrylamido - 2 - methylpropanesulphonate.

7. A composition according to any of Claims 3 to 6, further characterised in that the water soluble acrylic polymer has a molecular weight of not less than 1,000,000 and is obtained by polymerizing from 3 to 95 mole % of said vinyl sulphonic monomer with from 97 to 5 mole % of said vinyl monomer.

**Patentansprüche**

1. Beton- oder Mörtelzusammensetzung enthaltend Zement und grob- und/oder feinkörnige Zuschlagstoffe, dadurch gekennzeichnet, daß diese Zusammensetzung ohne wesentliche Abtrennung oder Auswaschen des Zements unter Wasser verlegt werden kann, wobei die Zusammensetzung 0,1 bis 4 Gew.% auf Basis des Gewichts des Zements eines Additivs enthält, das in dieser Zusammensetzung wirksam ist, diese Abtrennung des Zements zu verhindern, und im wesentlichen aus einem wasserlöslichen Vinylpolymeren besteht, das Einheiten enthält, die durch die allgemeine Formel (I) wiedergegeben werden:

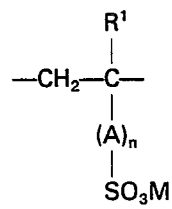

(I)

in der $R^1$ ein Wasserstoffatom oder ein niederer Alkylrest ist,
A $-CH_2-$, $-CONHCH_2-$, oder

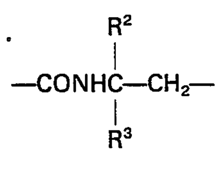

ist, in der $R^2$ und $R^3$ Wasserstoffatome oder eine niedere Alkylgruppe darstellen und gleich oder unterschiedlich sein können, n gleich 0 oder 1 ist, und M ein Wasserstoffatom, Alkalimetall oder Ammonium ist.

2. Zusammensetzung nach Anspruch 1, weiter dadurch gekennzeichnet, daß das wasserlösliche Vinylpolymer, zusätzlich zu den durch Formel (I) wiedergegebenen Einheiten, Einheiten enthält, die durch die allgemeine Formel (II) wiedergegeben werden:

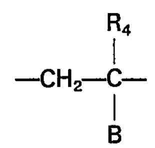

(II)

in der $R_4$ ein Wasserstoffatom oder ein niederer Alkylrest ist, B $-CONH_2$ oder $-COOR_5$ darstellt, worin $R_5$ ein niederer Alkylrest oder eine niedere Hydroxyalkylgruppe ist.

3. Zusammensetzung nach Anspruch 2, weiter dadurch gekennzeichnet, daß das wasserlösliche

Vinylpolymer erhalten wird durch Polymerisieren eines Vinylsulfonischen Monomeren, wiedergegeben durch die allgemeine Formel (III):

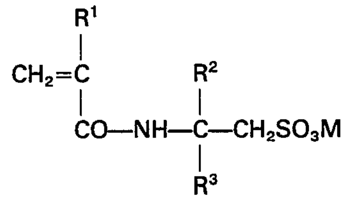

(III)

in der $R^1$, $R^2$ und $R^3$ ein Wasserstoffatom oder eine niedere Alkylgruppe darstellen und jeweils gleich oder unterschiedlich sein können, in der M ein Wasserstoffatom, ein Alkalimetall oder Ammonium ist, mit einem Vinylmonomeren, das durch die allgemeine Formel (IV) wiedergegeben wird:

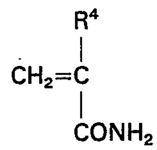

(IV)

in der $R^4$ ein Wasserstoffatom oder eine niedere Alkylgruppe ist.

4. Zusammensetzung nach Anspruch 1, weiter dadurch gekennzeichnet, daß das wasserlösliche Vinylpolymer erhalten wird durch Polymerisieren eines Vinylsulfonischen Monomeren, gemäß der allgemeinen Formel (III):

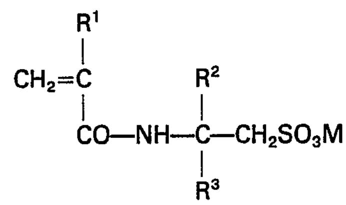

(III)

in der $R^1$, $R^2$ und $R^3$ ein Wasserstoffatom oder eine niedere Alkylgruppe darstellen und jeweils gleich oder unterschiedlich sein können, und in der M ein Wasserstoffatom, ein Alkalimetall oder Ammonium ist, mit einem Vinylmonomeren gemäß der allgemeinen Formel (V):

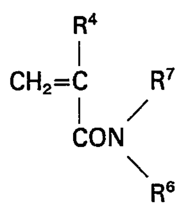

(V)

in der $R^4$ ein Wasserstoffatom oder eine niedere Alkylgruppe darstellt und $R^6$ und $R^7$ jeweils gleiche oder unterschiedliche niedere Alkylgruppen darstellen oder wenn einer von ihnen ein Wasserstoffatom ist, der andere eine niedere Alkylgruppe darstellt, wobei $R^6$ und $R^7$ geeignet sind, miteinander eine Bindung einzugehen mit oder ohne Sauerstoffatome gemeinsam mit Stickstoffatomen, die daran gebunden sind, so daß ein 5- oder 6-gliedriger Ring gebildet wird.

5. Zusammensetzung nach Anspruch 1, weiter dadurch gekennzeichnet, daß das wasserlösliche Vinylpolymer erhalten wird durch Copolymerisierung eines Vinylsulfonischen Monomeren ausgewählt aus 2 - Acrylamido - Ethansulfonsäure, 2 - Acrylamido - Propansulfonsäure, 2 - Acrylamido - 2 - Methylpropansulfonsäure, 2 - Methacrylamido - Ethansulfonsäure, 2 - Methacrylamido - Propansulfonsäure, 2 - Methacrylamido - 2 - Methyl - Propansulfonsäure, Acrylamido - Methansulfonsäure, Methacrylamido - Methansulfonsäure, Vinylsulfonsäure, und Alkalimetall- oder Ammoniumsalzen dieser Säuren mit einem Vinylmonomeren ausgewählt aus Acrylamid, Methacrylamid, N,N - Dimethylacrylamid, N,N - Diethylacrylamid, N - Acryloylpiperidin, N - Acryloylmorpholin, N,N - Dimethylmethacrylamid, N,N - Diethylmethacrylamid, N - Methacryloylpiperidin, N - Methacryloylmorpholin, N - Methacrylamid, N - Ethylacrylamid, N - Propylacrylamid, N - Methylmethacrylamid, N - Ethylmethacrylamid, N - Propylmethacrylamid, Methylacrylat, Ethylacrylat, Hydroxyethylacrylat, Methylmethacrylat, Ethylmethacrylat und Hydroxyethylmethacrylat.

6. Zusammensetzung nach Anspruch 4, weiter dadurch gekennzeichnet, daß das wasserlösliche

Polymer ein Copolymer aus Acrylamid, Methacrylamid oder N,N - Dimethylacrylamid und 2 - Acrylamido - 2 - Methylpropansulfonat enthält.

7. Zusammensetzung nach einem der Ansprüche 3 bis 6, weiter dadurch gekennzeichnet, daß das wasserlösliche Acrylpolymer ein Molekulargewicht von nicht weniger als 1 000 000 hat, und erhalten wird durch Polymerisieren von 3 bis 95 Mol % des Vinylsulfonischen Monomeren mit 97 bis 5 Mol % des Vinylmonomeren.

**Revendications**

1. Composition de mortier ou de béton comprenant du ciment et un agrégat grossier et/ou fin; caractérisée par le fait que cette composition est capable d'être placée sous l'eau sans séparation ou élimination par lavage notable de ciment, cette composition contenant 0,1 à 4% en poids, par rapport au poids de ciment, d'un additif efficace dans cette composition pour empêcher pratiquement cette séparation de ciment, et constituée uniquement d'un polymère vinylique soluble dans l'eau contenant des motifs représentés par la formule générale (I):

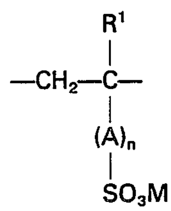

(I)

dans laquelle $R^1$ est un atome d'hydrogène ou un groupe alkyle inférieur, A est $—CH_2—$, $—CONHCH_2—$, ou

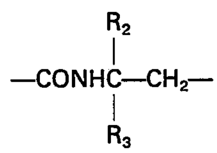

où $R^2$ et $R^3$ sont un atome d'hydrogène ou un groupe alkyle inférieur et peuvent être identiques ou différents, n est 0 ou 1, et M est un atome d'hydrogène, un métal alcalin ou l'ammonium.

2. Composition selon la revendication 1, caractérisée en outre par le fait que le polymère vinylique soluble dans l'eau contient, en plus des motifs représentés par la formule (I), des motifs représentés par la formule générale (II):

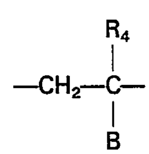

(II)

dans laquelle $R_4$ est un atome d'hydrogène ou un groupe alkyle inférieur, B est $—CONH_2$ ou $—COOR_5$, $R_5$ étant un groupe alkyle inférieur ou un groupe hydroxyalkyle inférieur.

3. Composition selon la revendication 2, caractérisée en outre par le fait que le polymère vinylique soluble dans l'eau est obtenu en polymérisant un polymère vinyle sulfonique représenté par la formule générale (III):

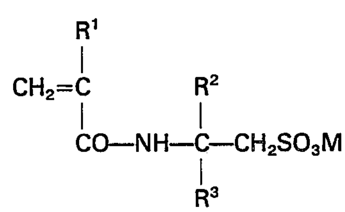

(III)

dans laquelle $R^1$, $R^2$ et $R^3$ sont un atome d'hydrogène ou un groupe alkyle inférieur et peuvent être identiques ou différents, et M est un atome d'hydrogène, un métal alcalin ou l'ammonium, avec un monomère vinylique représenté par la formule générale (IV):

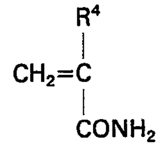

(IV)

dans laquelle $R^4$ ets un atome d'hydrogène ou un groupe alkyle inférieur.

4. Composition selon la revendication 1, caractérisée en outre par le fait que le polymère vinylique soluble dans l'eau est obtenu en polymérisant un monomère vinyle sulfonique représenté par la formule générale (III):

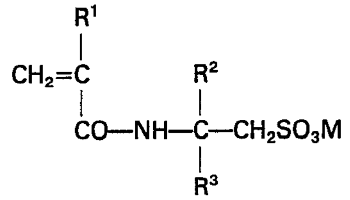

(III)

dans laquelle $R^1$, $R^2$ et $R^3$ sont un atome d'hydrogène ou un groupe alkyle inférieur et peuvent être identiques ou différents, et M est un atome d'hydrogène, un métal alcalin ou l'ammonium, avec un monomère vinylique représenté par la formule générale (V):

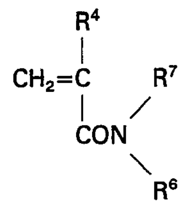

(V)

dans laquelle $R^4$ est un atome d'hydrogène ou un groupe alkyle inférieur et $R^6$ et $R^7$ sont des groupes alkyle inférieur identiques ou différents, ou tels que lorsque l'un est un atome d'hydrogène, l'autre est un groupe alkyle inférieur, $R^6$ et $R^7$ étant susceptibles de se lier l'un à l'autre avec ou sans atomes d'oxygène, avec des atomes d'azote liés à ceuix-ci pour former un cycle à 5 ou 6 maillons.

5. Composition selon la revendication 1, caractérisée en outre par le fait que le polymère vinylique soluble dans l'eau est obtenu par copolymérisation d'un monomère vinyle sulfonique, choisi parmi l'acide 2 - acrylamido - éthanesulfonique, l'acide 2 - acrylamido - propanesulfonique, l'acide 2 - acrylamido - 2 - méthylpropanesulfonique, l'écide 2 - méthacrylamido - éthanesulfonique, l'acide 2 - méthacrylamido - propanesulfonique, l'acide 2 - méthacrylamido - 2 - méthyl - propanesulfonique, l'acide acrylamido - méthanesulfonique, l'acide méthacrylamido - méthanesulfonique, l'acide vinyle sulfonique et leurs sels de métaux alcalins ou d'ammonium avec un monomère vinylique choisi parmi l'acrylamide, le méthacrylamide, le N,N - diméthylacrylamide, le N,N - diéthylacrylamide, la N - acryloylpipéridine, la N - acryloylmorpholine, le N,N - diméthylméthacrylamide, le N,N - diéthylméthacrylamide, la N - méthacryloylpipéridine, la N - méthacryloylmorpholine, le N - méthacrylamide, le N - éthylacrylamide, le N - propylacrylamide, le N - méthylméthacrylamide, le N - éthylméthacrylamide, le N - propylméthacrylamide, l'acrylate de méthyle, l'acrylate d'éthyle, l'acrylate d'hydroxyéthyle, le méthacrylate de méthyle, le méthacrylate d'éthyle et le méthacrylate d'hydroxyéthyle.

6. Composition selon la revendication 4, caractérisée en outre par le fait que le polymère soluble dans l'eau comprend un copolymère d'acrylamide, de méthacrylamide ou de N,N - diméthylacrylamide et de 2 - acrylamido - 2 - méthylpropanesulfonate.

7. Composition selon l'une quelconque des revendications 3 à 6, caractérisée en outre par le fait que le polymère acrylique soluble dans l'eau a une masse moléculaire non inférieure à 1.000.000 et est obtenu en polymérisant de 3 à 95 moles % de ce monomère vinyle sulfonique avec de 97 à 5 moles % de ce monomère vinylique.